(19) **Europäisches Patentamt**
**European Patent Office**
**Office européen des brevets**

(11) **EP 4 679 514 A1**

(12) **EUROPEAN PATENT APPLICATION**

(43) Date of publication:
**14.01.2026 Bulletin 2026/03**

(21) Application number: **25187304.8**

(22) Date of filing: **03.07.2025**

(51) International Patent Classification (IPC):
*H01M 4/04* [(2006.01)]     *H01M 4/131* [(2010.01)]
*H01M 4/1391* [(2010.01)]    *H01M 4/36* [(2006.01)]
*H01M 4/505* [(2010.01)]    *H01M 4/525* [(2010.01)]
*H01M 4/62* [(2006.01)]

(52) Cooperative Patent Classification (CPC):
**H01M 4/04; H01M 4/131; H01M 4/1391;
H01M 4/364; H01M 4/505; H01M 4/525;
H01M 4/625;** H01M 10/052

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **05.07.2024 KR 20240089142**

(71) Applicant: **SAMSUNG SDI CO., LTD.
Yongin-si, Gyeonggi-do 17084 (KR)**

(72) Inventors:
- **PARK, Sejeong**
  **17084 Yongin-si (KR)**
- **KANG, Younghye**
  **17084 Yongin-si (KR)**

- **LEE, Minju**
  **17084 Yongin-si (KR)**
- **OH, Songyul**
  **17084 Yongin-si (KR)**
- **KO, Donghyun**
  **17084 Yongin-si (KR)**
- **CHOI, Kyuhwan**
  **17084 Yongin-si (KR)**
- **LEE, Boram**
  **17084 Yongin-si (KR)**
- **LEE, Junsik**
  **17084 Yongin-si (KR)**
- **LEE, Seongsun**
  **17084 Yongin-si (KR)**

(74) Representative: **Maiwald GmbH
Elisenhof
Elisenstraße 3
80335 München (DE)**

(54) **POSITIVE ELECTRODES AND RECHARGEABLE LITHIUM BATTERIES INCLUDING THE SAME**

(57)     A positive electrode includes a positive electrode current collector and a positive electrode active material layer located on the positive electrode current collector and including a positive electrode active material and a conductive material. The positive electrode active material includes a layered lithium nickel-manga- nese-based composite oxide. The positive electrode may derive a reduced amount of a required conductive material using only the information of the positive electrode active material, thereby realizing high capacity and low mixture resistance, thereby enabling the realization of a long cycle-life.

900

| 910 | Measuring Average Particle Diameter Of Positive Electrode Active Material Including Layered Lithium Nickel-manganese-based Composite Oxide |

↓

| 920 | Calculating Specific Surface Area of Positive Electrode Active Material Using Average Particle Diameter |

↓

| 930 | Substituting Specific Surface Area of Positive Electrode Active Material into Equation 1 |

↓

| 940 | Forming Positive Electrode Active Material Layer Including Positive Electrode Active Material and Reduced Content of Conductive Material on Positive Electrode Current Collector |

**FIG. 9**

EP 4 679 514 A1

**Description**

**BACKGROUND**

**1. Field**

Positive electrodes, and rechargeable lithium batteries including the positive electrodes, are disclosed.

**2. Description of the Related Art**

Portable information devices such as, e.g., cell phones, laptops, smart phones, and the like, or electric vehicles, among other devices, typically use a rechargeable lithium battery having high energy density and portability as a driving power source. Accordingly, producing rechargeable lithium batteries with high energy density as a driving power source or power storage power source for hybrid or electric vehicles may be advantageous.

Various positive electrode active materials and conductive materials have been investigated to produce rechargeable lithium batteries for the above-discussed applications. Herein, a desired amount of the conductive materials may be determined in a method of resistance of an electrode plate obtained by coating and pressing a slurry on a substate or solidifying the slurry into powder to measure resistance of the powder, but it is typically inefficient to prepare the slurry each time to determine the resistance of the electrode plate or the powder.

Accordingly, deriving the desired amount of the conductive materials by using basic information of the positive electrode active materials alone may be advantageous.

**SUMMARY**

A method for deriving a minimum or reduced amount of a desired conductive material using only information on a positive electrode active material, and a positive electrode and rechargeable lithium battery using the method, are provided.

In some example embodiments, a positive electrode includes a positive electrode current collector, and a positive electrode active material layer located on the positive electrode current collector and including a positive electrode active material and a conductive material. The positive electrode active material includes a layered lithium nickel-manganese-based composite oxide, and in the positive electrode active material layer, the positive electrode active material and the conductive material satisfy Equation 1 below.

$$\text{Equation 1:}$$

$$y = 1.0923x^2 + 0.102x + 0.7471$$

In Equation 1, x is a specific surface area of the positive electrode active material, $0.13 \leq x \leq 0.63$, and y is a content of the conductive material based on 100 wt% of the positive electrode active material layer.

In some example embodiments, a method for manufacturing a positive electrode includes i) measuring an average particle diameter ($D_{50}$) of a positive electrode active material including a layered lithium nickel-manganese-based composite oxide using a particle size analyzer; ii) calculating a specific surface area of the positive electrode active material using an average particle diameter ($D_{50}$) assuming that the positive electrode active material is spherical; iii) substituting the specific surface area of the positive electrode active material into Equation 1 to obtain a minimum or reduced content of the conductive material; and iv) forming a positive electrode active material layer including the positive electrode active material and the minimum or reduced content of a conductive material on a positive electrode current collector.

$$\text{Equation 1:}$$

$$y = 1.0923x^2 + 0.102x + 0.7471$$

In Equation 1, x is a specific surface area of the positive electrode active material, $0.13 \leq x \leq 0.63$, and y is a content of the conductive material based on 100 wt% of the positive electrode active material layer.

Example embodiments include a rechargeable lithium battery including the positive electrode, a negative electrode, and an electrolyte solution.

According to some example embodiments, the positive electrode may derive the minimum or reduced amount of a desired conductive material using only the information of the positive electrode active material, thereby realizing high capacity and low mixture resistance, and enabling the realization of a long cycle-life.

**BRIEF DESCRIPTION OF THE DRAWINGS**

FIGS. 1 to 4 are schematic views schematically illustrating a lithium rechargeable battery according to some example embodiments.

FIG. 5 is a graph showing the particle size analyzer (PSA) particle size distribution according to the content of the conductive material in Example 2.

FIG. 6 is a graph showing the PSA particle size distribution according to the content of the conductive material in Example 3.

FIG. 7 is a graph showing the PSA particle size distribution according to the content of the conductive material in Example 4.

FIG. 8 is a graph showing the amount of conductive material desired according to the specific surface area of the positive electrode active materials of Examples 1 to 6.

FIG. 9 is a flow chart illustrating a method of manufacturing a positive electrode, according to example embodiments.

**DETAILED DESCRIPTION**

Hereinafter, example embodiments are described in detail so that those of ordinary skill in the art can readily implement them. However, this disclosure may be embodied in many different forms and is not construed as limited to the example embodiments set forth herein.

The terminology used herein is used to describe example embodiments only, and is not intended to limit the present disclosure. The singular expression includes the plural expression unless the context clearly dictates otherwise.

As used herein, "combination thereof" indicates a mixture, a laminate, a composite, a copolymer, an alloy, a blend, a reaction product, and the like of the constituents.

Herein, it may be understood that terms such as "comprises," "includes," or "have" are intended to designate the presence of a feature, number, step, element, or a combination thereof, but it does not preclude the possibility of the presence or addition of one or more other features, number, step, element, or a combination thereof.

In the drawings, the thickness of layers, films, panels, regions, and the like, may be exaggerated for clarity and like reference numerals designate like elements throughout the specification. It is understood that when an element such as a layer, film, region, or substrate is referred to as being "on" another element, the element can be "directly on" the other element, or intervening elements may also be present. In contrast, when an element is referred to as being "directly on" another element, there are no intervening elements present.

"Layer" herein includes not only a shape formed on the whole surface when viewed from a plan view, but also a shape formed on a partial surface.

The average particle diameter may be measured by a method known to those skilled in the art, for example, by a particle size analyzer, or by a transmission electron microscope image or a scanning electron microscope image. Alternatively, it is possible to obtain an average particle diameter value by measuring using a dynamic light scattering method, performing data analysis, counting the number of particles for each particle size range, and calculating from this. Unless otherwise defined, the average particle diameter ($D_{50}$) may indicate the diameter of particles having a cumulative volume of 50 volume% in the particle size distribution. As used herein, when a definition is not otherwise provided, the average particle diameter ($D_{50}$) indicates a diameter of particles having a cumulative volume of 50 volume% in the particle size distribution that is obtained by measuring the size (diameter or major axis length) of about 20 particles at random in a scanning electron microscope image.

Herein, "or" is not to be construed as an exclusive meaning, for example, "A or B" is construed to include A, B, A+B, and the like.

"Metal" is interpreted as a concept including ordinary metals, transition metals and metalloids (semi-metals).

When the terms "about" or "substantially" are used in this specification in connection with a numerical value, it is intended that the associated numerical value include a tolerance of $\pm10\%$ around the stated numerical value. When ranges are specified, the range includes all values therebetween such as increments of 0.1%.

**Positive Electrode**

In some example embodiments, a positive electrode includes a positive electrode current collector; and a positive electrode active material layer located on the positive electrode current collector and including a positive electrode active material and a conductive material. The positive electrode active material includes a layered lithium nickel-manganese-based composite oxide, and in the positive electrode active material layer, the positive electrode active material and the conductive material satisfy Equation 1 below.

Equation 1:

$$y = 1.0923x^2 + 0.102x + 0.7471$$

In Equation 1, x is a specific surface area ($m^2$/g) of a positive electrode active material, $0.13 \leq x \leq 0.63$, and y is a content (wt%) of the conductive material based on 100 wt% of the positive electrode active material layer.

The positive electrode active material layer includes the positive electrode active material and the conductive material, wherein the conductive material may be included in a desired amount to a content of the positive electrode active material, and to reduce resistance of the positive electrode, thereby achieving high capacity and a long cycle-life. At this time, a desired amount of the conductive material may be determined by determining the resistance of an electrode plate obtained by coating and pressing a slurry, or solidifying the slurry into powder to measure the resistance of the powder, but it may be inefficient to prepare the slurry each time to determine the powder resistance or the electrode plate resistance.

The positive electrode according to some example embodiments may make it possible to derive a desired minimum or reduced content of the conductive material by using information of the positive electrode active material alone, thereby achieving high capacity and low mixture resistance to achieve a long cycle-life.

In addition, because the desired minimum or reduced content of the conductive material varies depending on types of the positive electrode active material applied to the positive electrode, deriving a desired content of the conductive material each time according to compositions or characteristics of the positive electrode active material may be challenging. Some example embodiments, in a positive electrode to which a positive electrode active material including a layered lithium nickel-manganese-based composite oxide is applied, include simply deriving the minimum or reduced content of the conductive material and adding thereto to maximize or improve capacity and energy density but lower resistance, thereby improving overall performance of the positive electrode. Some example embodiments may reduce or prevent problems such as deterioration of electron conductivity or an increase in resistance due to an insufficient content of the conductive material in the positive electrode and in addition, effectively reduce or prevent another problem of deteriorating capacity and energy density due to substantial or excessive addition of the conductive material, so that the positive electrode active material may not be included to a maximum content.

Positive Electrode Active Material

As the price of cobalt, a rare metal, has recently risen sharply, there is a demand for the development of positive electrode active materials that exclude cobalt or reduce its content. Among them, a positive electrode active material having an olivine crystal structure such as lithium iron phosphate (LFP), lithium manganese phosphate (LMP), lithium manganese iron phosphate (LMFP), and the like or a spinel crystal structure such as lithium manganese oxide (LMO) and the like has a limitation in achieving high capacity due to a small available lithium amount within the structure. The layered lithium nickel-manganese-based positive electrode active material has desired or improved capacity and efficiency characteristics due to the high available lithium amount in the structure, making it suitable as a material for high-capacity batteries. However, as cobalt, which plays a key role in the layered structure, is removed, structural stability decreases, resistance increases, and it becomes difficult to secure long cycle-life characteristics. **In** addition, the layered lithium nickel-manganese-based positive electrode active material, from which cobalt is excluded, may rather have a problem of accelerated side reaction with an electrolyte under high-voltage and high-temperature conditions, resultantly increasing gas generation and deteriorating cycle-life characteristics.

Accordingly, in some example embodiments, a method of improving capacity and cycle-life characteristics is proposed by using a lithium nickel-manganese-based composite oxide as a positive electrode active material and deriving the minimum or reduced amount of a desired conductive agent by measuring the specific surface area of the positive electrode active material.

**In** the layered lithium nickel-manganese-based composite oxide, a nickel content may be greater than or equal to about 60 mol%, for example about 60 mol% to about 80 mol%, about 65 mol% to about 80 mol%, about 70 mol% to about 80 mol%, about 60 mol% to about 79 mol%, about 60 mol% to about 78 mol%, or about 60 mol% to about 75 mol% based on 100 mol% of a total metal excluding lithium. When the nickel content satisfies the above range, high capacity may be achieved and structural stability may be increased even when the cobalt content is reduced.

A manganese content may be, for example, greater than or equal to about 15 mol%, for example about 15 mol% to about 40 mol%, about 15 mol% to about 35 mol%, about 15 mol% to about 30 mol%, or about 20 mol% to about 30 mol% based on 100 mol% of a total metal excluding lithium in the layered lithium nickel-manganese-based composite oxide.

When the manganese content satisfies the above range, the positive electrode active material may improve structural stability while achieving high capacity.

The lithium nickel-manganese-based composite oxide may be a lithium nickel-manganese-aluminum-based composite oxide that further includes aluminum in addition to nickel and manganese. When the composite oxide includes aluminum, it is advantageous to maintain a stable layered structure even when the cobalt element is excluded from the structure. An aluminum content based on 100 mol% of the lithium nickel-manganese-aluminum-based composite oxide may be greater than or equal to about 0.1 mol%, greater than or equal to about 0.5 mol%, or greater than or equal to about 1 mol%, for example, about 1 mol% to about 3 mol%, about 1 mol% to about 2.5 mol%, about 1 mol% to about 2 mol%, or about 1.5 mol% to about 2.5 mol%. When the aluminum content satisfies the above range, a stable layered structure may be maintained even when cobalt is excluded, the problem of structure collapse due to charging and discharging may be reduced or suppressed, and long cycle-life characteristics of the positive electrode active material may be achieved.

According to some example embodiments, a concentration of aluminum in particles including the lithium nickel-manganese-based composite oxide may be substantially uniform. In other words, this indicates that there is substantially no concentration gradient of aluminum from the center to the surface within the particle, or an aluminum concentration on the outside of the particle is neither higher nor lower than on the inside, and that the aluminum within the particle is substantially evenly distributed. This may be a structure obtained by synthesizing a composite oxide using nickel-manganese-aluminum-based hydroxide as a precursor by using aluminum raw materials during precursor production without additional doping of aluminum during the synthesis of the lithium nickel-manganese-based composite oxide. The particle may be in the form of a secondary particle in which a plurality of primary particles are aggregated, and an aluminum content inside the primary particles may be the same or similar regardless of locations of the primary particles. In other words, when one primary particle may be selected at any position of the cross-section of the secondary particle to measure the aluminum content inside the primary particle rather than on the surface of the primary particle, the aluminum content may be expressed as the same/similar/uniform regardless of the location of the primary particle, that is, whether the primary particle is close to the center or to the surface of the secondary particle. In this structure, a stable layered structure can be maintained even when cobalt is absent or is present in a very small amount, and aluminum by-products or aluminum aggregates are not generated, so that the capacity, efficiency, and cycle-life characteristics of the positive electrode active material can also be improved.

The layered lithium nickel-manganese-based composite oxide may be represented by Chemical Formula 1.

$$\text{Chemical Formula 1:} \qquad \text{Li}_{a1}\text{Ni}_{x1}\text{Mn}_{y1}\text{Al}_{z1}\text{M}^1_{w1}\text{O}_{2-b1}\text{X}_{b1}$$

In Chemical Formula 1, $0.9 \leq a1 \leq 1.8$, $0.6 \leq x1 \leq 0.8$, $0.1 \leq y1 \leq 0.4$, $0 \leq z1 \leq 0.03$, $0 \leq w1 \leq 0.3$, $0.9 \leq x1+y1+z1+w1 \leq 1.1$, and $0 \leq b1 \leq 0.1$, $M^1$ is or includes one or more of B, Ba, Ca, Ce, Cr, Fe, Mg, Mo, Nb, Si, Sn, Sr, Ti, V, W, Y, Zr, and Zn, and X is or includes one or of F, P, and S.

In Chemical Formula 1, $0.9 \leq a1 \leq 1.5$, or $0.9 \leq a1 \leq 1.2$. Additionally, Chemical Formula 1 may include aluminum, in which case $0.6 \leq x1 \leq 0.8$, $0.1 \leq y1 \leq 0.39$, $0.01 \leq z1 \leq 0.03$, and $0 \leq w1 \leq 0.29$, may be satisfied, or for example, $0.6 \leq x1 \leq 0.8$, $0.1 \leq y1 \leq 0.39$, $0.01 < z1 \leq 0.03$, and $0 \leq w1 \leq 0.29$ may be satisfied.

In Chemical Formula 1, for example, $0.6 \leq x1 \leq 0.79$, $0.6 \leq x1 \leq 0.78$, $0.6 \leq x1 \leq 0.75$, $0.65 \leq x1 \leq 0.8$, or $0.7 \leq x1 \leq 0.79$, $0.1 \leq y1 \leq 0.35$, $0.1 \leq y1 \leq 0.30$, $0.1 \leq y1 \leq 0.29$, $0.15 \leq y1 \leq 0.39$, or $0.2 \leq y1 \leq 0.3$, $0.01 \leq z1 \leq 0.025$, $0.01 < z1 \leq 0.02$, or $0.01 < z1 \leq 0.019$, $0 \leq w1 \leq 0.28$, $0 \leq w1 \leq 0.27$, $0 \leq w1 \leq 0.26$, $0 \leq w1 \leq 0.25$, $0 \leq w1 \leq 0.24$, $0 \leq w1 \leq 0.23$, $0 \leq w1 \leq 0.22$, $0 \leq w1 \leq 0.21$, $0 \leq w1 \leq 0.2$, $0 \leq w1 \leq 0.15$, $0 \leq w1 \leq 0.1$, or $0 \leq w1 \leq 0.09$.

For example, the lithium nickel-manganese-based composite oxide may not include, or may include a small amount of, cobalt, and a cobalt content may be less than or equal to about 2 mol%, less than or equal to about 1 mol%, or about 0 mol% to about 0.01 mol% based on 100 mol% of a total metal excluding lithium.

The particle including the layered lithium nickel-manganese-based composite oxide may be in the form of the secondary particle formed by agglomeration of the plurality of primary particles. Herein, the secondary particle may be substantially spherical, substantially ellipsoidal, substantially polyhedral, or irregularly-shaped, and the primary particles may be substantially spherical, substantially ellipsoidal, substantially plate-shaped, or a combination thereof.

Some example embodiments include a positive electrode active material including a first positive electrode active material including the layered lithium nickel-manganese-based composite oxide; and a second positive electrode active material including the layered lithium nickel-manganese-based composite oxide.

The first positive electrode active material has an average particle diameter ($D_{50}$) in a range of about 10 $\mu$m to about 25 $\mu$m, for example, about 11 $\mu$m to about 20 $\mu$m, or about 12 $\mu$m to about 18 $\mu$m. The second positive electrode active material may have an average particle diameter ($D_{50}$) in a range of about 0.1 $\mu$m to about 5 $\mu$m, for example, about 0.5 $\mu$m to about 5 $\mu$m, or about 1 $\mu$m to about 5 $\mu$m. Herein, the mixed positive electrode active material may have an average particle diameter ($D_{50}$) in a range of about 3 $\mu$m to about 15 $\mu$m, for example, about 4 $\mu$m to about 14 $\mu$m, or about 5 $\mu$m to about 12 $\mu$m. As included herein, when a definition is not otherwise provided, the average particle diameter ($D_{50}$) indicates a diameter of particles having a cumulative volume of 50 volume% in the particle size distribution that is obtained by measuring the size (diameter or major axis length) of about 20 particles at random in a scanning electron microscope image for positive electrode active materials.

The first positive electrode active material and the second positive electrode active material may be mixed in a weight ratio in a range of about 80:20 to about 10:90, for example, about 80:20 to about 20:80, or about 80:20 to about 30:70. When mixed in the above ratio, high capacity can be achieved while maximizing energy density.

Conductive Material

The conductive material is included to provide electrode conductivity, and any electrically conductive material may be included as a conductive material unless the electrically conductive material causes a chemical change. Examples of the conductive material may include a carbon-based material such as at least one of natural graphite, artificial graphite, carbon black, acetylene black, ketjen black, a carbon fiber, a carbon nanofiber, a carbon nanotube, and the like; a metal-based material of a metal powder or a metal fiber including at least one of copper, nickel, aluminum, silver, and the like; a conductive polymer such as a polyphenylene derivative; or a mixture thereof.

The conductive material may include, for example, a linear conductive material, a spherical conductive material, or a mixture of the linear conductive material and the spherical conductive material. The linear conductive material may have a fiber shape or a tube shape, for example, a conductive material with an aspect ratio that is equal to or greater than about 2, or equal to or greater than about 10. For example, the linear conductive material may be or include at least one of a carbon nanofiber, a carbon nanotube, or a combination thereof. The spherical conductive material may be or include a particle-type conductive material, which may be understood to include a spherical shape, an ellipsoidal shape close to the spherical shape, or a polygonal shape. The spherical conductive material may have an aspect ratio in a range of about 0.8 to about 1.2 or about 0.9 to about 1.1, for example, at least one of carbon black, acetylene black, Ketjen black, or a combination thereof.

When the conductive material includes the linear conductive material and the spherical conductive material, the linear conductive material and the spherical conductive material may be mixed in a weight ratio in a range of about 10:90 to about 90:10, for example, about 20:80 to about 80:20, about 30:70 to about 70:30, or about 40:60 to about 60:40. When the weight ratio of the linear conductive material to the spherical conductive material falls within the above ranges, high electrical conductivity may be realized by the reduced content of the conductive material, thereby increasing capacity and reducing the electrode plate resistance.

**In** a positive electrode active material layer according to some example embodiments, the positive electrode active material and the conductive material satisfy Equation 1.

Equation 1:

$$y = 1.0923x^2 + 0.102x + 0.7471$$

In Equation 1, x is a specific surface area ($m^2/g$) of the positive electrode active material, $0.13 \leq x \leq 0.63$, and y is a content (wt%) of the conductive material based on 100 wt% of the positive electrode active material layer.

In Equation 1, the content of the conductive material may be expressed as a unit of "wt%" based on 100 wt% of the positive electrode active material layer, and the specific surface area of the positive electrode active material is expressed as a unit of "$m^2/g$."

In addition, in Equation 1, the specific surface area of the positive electrode active material may be obtained by measuring an average particle diameter ($D_{50}$ = 2r) of the positive electrode active material and the number of the positive electrode active material with a particle size analyzer, calculating $4 \pi r^2$ as a surface area of the positive electrode active material under the assumption that the positive electrode active material is spherical, multiplying the surface area by the number of the positive electrode active material, and dividing a product therefrom by a weight of the positive electrode active material in the positive electrode active material layer. Herein, the particle size analyzer may be, for example, a laser diffraction particle size measuring device (e.g., MT 3000, Microtrac Inc.).

The specific surface area (x) of positive electrode active material according to some example embodiments may be in a range of about $0.13 \, m^2/g$ to about $0.63 \, m^2/g$, for example, about $0.2 \, m^2/g$ to about $0.6 \, m^2/g$, about $0.25 \, m^2/g$ to about $0.58 \, m^2/g$, about $0.3 \, m^2/g$ to about $0.55 \, m^2/g$, about $0.35 \, m^2/g$ to about $0.52 \, m^2/g$, or about $0.4 \, m^2/g$ to about $0.5 \, m^2/g$. In addition, the content (y) of the conductive material according to some example embodiments may be in a range of about 0.6 wt% to about 1.5 wt% based on 100 wt% of the total positive electrode active material layer, for example, about 0.7 wt% to about 1.3 wt%, or about 0.8 wt% to about 1.2 wt%. The positive electrode including the positive electrode active material having a specific surface area within the above ranges, and the conductive material having a content within the above ranges may realize high capacity and high energy density by using the reduced content of the conductive material.

According to Equation 1, the mathematical relationship of the specific surface area of the positive electrode active material and the minimum or reduced content of the conductive material may be derived, through which a content the positive electrode active material may be calculated, and accordingly, a positive electrode including the content of the positive electrode active material and the minimum or reduced content of the conductive material may be obtained in terms of conductivity, energy density, and cycle-life performance.

A method of deriving the mathematical relationship of the specific surface area of the positive electrode active material and the minimum or reduced content of the conductive material may be performed by preparing positive electrode slurry samples having various contents of the conductive material to measure the PSA particle size distribution thereof, and specify a content of the conductive material where a peak starts to appear within the range of about 0.01 $\mu$m to about 0.1 $\mu$m as a minimum or reduced content and using data of the surface area of the positive electrode active material and the minimum or reduced content of the conductive material.

The peak appearing within the range of about 0.01 $\mu$m to about 0.1 $\mu$m may be a peak appearing by the conductive material, but a PSA particle size distribution of a slurry including the conductive material in a smaller content than the specified content may exhibit substantially no peak within the range of about 0.01 $\mu$m to about 0.1 $\mu$m, which confirms that the content of the conductive material exists to be absorbed on the surface of the positive electrode active material.

On the other hand, a PSA particle size distribution of a slurry including the conductive material in a larger content than the specified content may exhibit a peak within the range of about 0.01 $\mu$m to about 0.1 $\mu$m, which indicates that the conductive material substantially or excessively exists beyond the extent to which the conductive material is adsorbed on the surface of the positive electrode active material, and that a conductive path is formed between active materials, wherein it is confirmed that the substantial or excessive use of the conductive material reduces the electrode plate resistance. Accordingly, the content of the conductive material where a peak starts to appear within the range of about 0.01 $\mu$m to about 0.1 $\mu$m may be specified as a desired minimum or reduced amount of the conductive material.

When a positive electrode using a positive electrode active material including a layered lithium nickel-manganese-based composite oxide satisfies Equation 1, it may be understood that the minimum or reduced amount of the conductive material desired for the positive electrode is included, which may reduce or prevent deterioration of electron conductivity or an increase in resistance due to an insufficient content of the conductive material in the positive electrode, and may also reduce or prevent the deterioration of capacity and energy density caused by not increasing the content of the positive electrode active material due to the substantial or excessive conductive material content. The positive electrode according to some example embodiments, which comprises a layered lithium nickel-manganese-based composite oxide, includes the desired minimum or reduced amount of the conductive material to improve or maximize capacity and energy density, and reduce resistance and improve electron conductivity, thereby improving overall battery performance such as cycle-life characteristics and the like.

Binder

The binder is configured to improve binding properties of positive electrode active material particles with one another and with a current collector. Examples of binders may include at least one of polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but are not limited thereto.

The content of each of, or at least one of, the binder and the conductive material may be in a range of about 0.5 wt% to about 5 wt% based on 100 wt% of the positive electrode active material layer.

The positive electrode current collector may include Al, and the like, but is not limited thereto.

Method of Manufacturing Positive Electrode

In some example embodiments, a method for manufacturing a positive electrode includes i) measuring an average particle diameter ($D_{50}$) of a positive electrode active material including a layered lithium nickel-manganese-based composite oxide using a particle size analyzer; ii) calculating a specific surface area of the positive electrode active material using an average particle diameter ($D_{50}$) assuming that the positive electrode active material is substantially spherical; iii) substituting the specific surface area of the positive electrode active material into Equation 1 to obtain a reduced content of the conductive material; and iv) forming a positive electrode active material layer including the positive electrode active material and the reduced content of a conductive material on a positive electrode current collector.

Equation 1:

$$y = 1.0923x^2 + 0.102x + 0.7471$$

In Equation 1, x is a specific surface area ($m^2/g$) of a positive electrode active material, $0.13 \leq x \leq 0.63$, and y is a content (weight%) of the conductive material based on 100 wt% of the positive electrode active material layer.

Through the method, the above positive electrode may be manufactured. The positive electrode active material, the conductive material, and Equation 1 are the same as described above and are not redundantly described in detail.

The average particle diameter ($D_{50}$) of the positive electrode active material may be measured by using, for example, a laser diffraction particle size measuring device (e.g., MT 3000, Microtrac Inc.). The specific surface area of the positive electrode active material may be measured by using, for example, a particle size analyzer to obtain the average particle diameter ($D_{50} = 2r$) of the positive electrode active material and count the number of the positive electrode active material, calculating $4\pi r^2$ under assumption that the positive electrode active material is spherical as a surface area of the positive electrode active material, multiplying the surface area by the number of the positive electrode active material, and dividing a product therefrom by a weight of the positive electrode active material in the positive electrode active material layer.

According to the manufacturing method, the positive electrode to which the positive electrode active material including the layered lithium nickel-manganese-based composite oxide is applied may be manufactured to include the reduced amount of the conductive material desired therefor. Accordingly, the positive electrode may reduce or prevent disadvantages such as deterioration of electron conductivity, and increase in resistance caused by insufficient conductive material and in addition, other disadvantages such as deteriorated capacity and energy density caused by not substantially increasing a content of the positive electrode active material due to substantial or excessive conductive material. The positive electrode manufactured by the method according to some example embodiments, which includes the layered lithium nickel-manganese-based composite oxide, may include the desired reduced amount of the conductive material, and thus increase or maximize capacity and energy density, and reduce resistance and improve electron conductivity, thereby enhancing overall battery performance such as, e.g., cycle-life characteristics and the like.

In other example embodiments, a method of deriving the reduced amount of the conductive material in the positive electrode includes mixing the positive electrode active material including the layered lithium nickel-manganese-based composite oxide and the conductive material in a solvent to prepare a positive electrode slurry; variously changing a content of the conductive material within a range of about 0.1 wt% to about 3 wt% based on 100 wt% of a solid content in the positive electrode slurry to prepare a plurality of positive electrode slurry samples; analyzing a size of particles in a slurry from a positive electrode slurry sample with a low conductive material content by using a particle size analyzer; and specifying a content of the conductive material included in positive electrode slurry sample at a point where a peak appears within a particle size range of about 0.01 $\mu$m to about 0.1 $\mu$m in the particle size analysis as a reduced content of the conductive material desired for the positive electrode. This method, in which an electrode plate does not need to be manufactured, is much simpler and more accurate than a conventional method of measuring resistance of the electrode plate to obtain the desired content of the conductive material.

The preparation of the positive electrode slurry samples may be performed by changing the content of the conductive material to, for example, about 0.1 wt%, about 0.2 wt%, 0.3 wt%, about 0.4 wt%, about 0.5 wt%, about 0.6 wt%, about 0.7 wt%, about 0.8 wt%, about 0.9 wt%, about 1.0 wt%, about 1.1 wt%, about 1.2 wt%, about 1.3 wt%, about 1.4 wt%, and about 1.5 wt% based on 100 wt% of a solid content of each sample.

For example, when a peak within the particle size range of about 0.01 $\mu$m to about 0.1 $\mu$m does not appear in a positive electrode slurry sample having the conductive material content of about 0.1 wt% to about 0.7 wt% but appears from a positive electrode slurry sample having the conductive material content of about 0.8 wt%, the reduced content of the conductive material desired for the corresponding positive electrode may be specified as about 0.8 wt%.

The positive electrode slurry may further include a binder, wherein the positive electrode active material, the conductive material, the binder, and the like, are the same as described above and are not further described in detail. The solvent may be or include a general solvent included for manufacturing a positive electrode, for example, N-methylpyrrolidone (NMP).

## Rechargeable Lithium Battery

Some example embodiments include a rechargeable lithium battery including the aforementioned positive electrode, negative electrode, and electrolyte. As an example, the rechargeable lithium battery may include a positive electrode, a negative electrode, a separator between the positive electrode and the negative electrode, and an electrolyte solution.

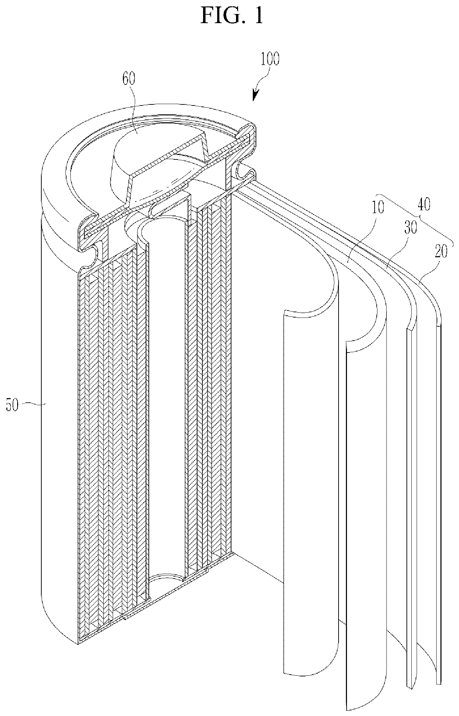

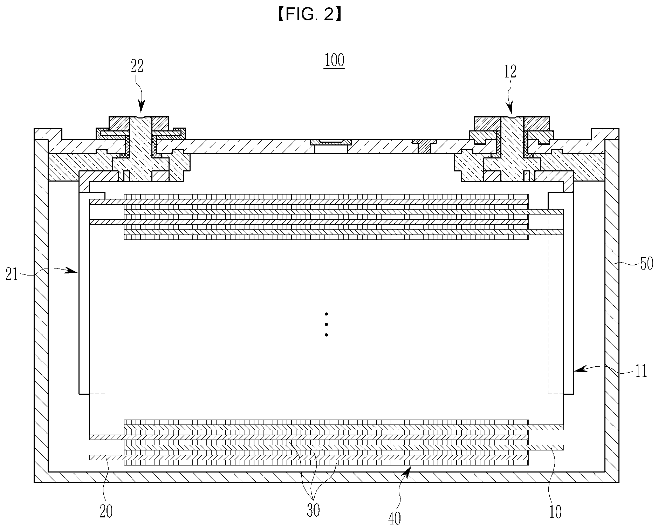

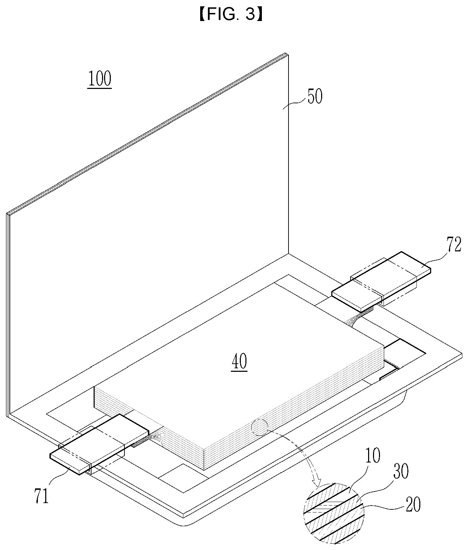

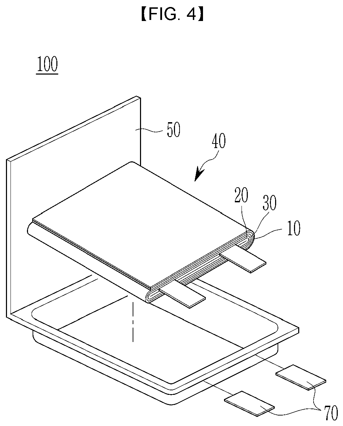

The rechargeable lithium battery may be classified into cylindrical, prismatic, pouch, coin, and the like, depending on the shape thereof. FIGS. 1 to 4 are schematic views illustrating the rechargeable lithium battery according to some example embodiments, where FIG. 1 is a cylindrical battery, FIG. 2 is a prismatic battery, and FIGS. 3 and 4 are a pouch-shaped battery. Referring to FIGS. 1 to 4, the rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution (not shown). The rechargeable lithium battery 100 may include a sealing member 60 that seals the case 50 as shown in FIG. 1. Additionally, in FIG. 2, the rechargeable lithium battery 100 may include a positive electrode lead tab 11, a positive electrode terminal 12, a negative electrode lead tab 21, and a negative electrode terminal 22. As shown in FIGS. 3 and 4, the rechargeable lithium battery 100 includes an electrode tab 70 illustrated in FIG. 4, or a positive electrode tab 71 and a negative electrode tab 72 illustrated in FIG. 3, the electrode tabs 70/71/72 forming an electrical path for inducing the current formed in the electrode assembly 40 to the outside of the battery 100.

## **Negative Electrode**

The negative electrode may include a current collector and a negative electrode active material layer on the current collector, and the negative electrode active material layer may include a negative electrode active material, and may further include a binder, a conductive material, or a combination thereof.

## Negative Electrode Active Material

The negative electrode active material may include a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include, for example crystalline carbon, amorphous carbon, or a combination thereof as a carbon-based negative electrode active material. The crystalline carbon may be irregular, or sheet, flake, spherical, or fiber shaped natural graphite or artificial graphite. The amorphous carbon may be or include at least one of a soft carbon, a hard carbon, a mesophase pitch carbonization product, calcined coke, and the like.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may include at least one of silicon, a silicon-carbon composite, $SiO_x$ (0<x≤2), a Si-Q alloy (wherein Q is or includes at least one of an alkali metal, an alkaline-earth metal, a Group 13 element, a Group 14 element (excluding Si), a Group 15 element, a Group 16 element, a transition metal, a rare earth element, and a combination thereof, for example at least one of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof), or a combination thereof. The Sn-based negative electrode active material may be or include at least one of Sn, $SnO_2$, a Sn alloy, or a combination thereof.

The silicon-carbon composite may be or include a composite of silicon and amorphous carbon. An average particle diameter ($D_{50}$) of the silicon-carbon composite particles may be, for example, in a range of about 0.5 μm to about 20 μm. According to some example embodiments, the silicon-carbon composite may be in the form of silicon particles, and amorphous carbon coated on the surface of the silicon particles. For example, the silicon-carbon composite may include a secondary particle (core) in which silicon primary particles are assembled, and an amorphous carbon coating layer (shell) on the surface of the secondary particle. The amorphous carbon may also be present between the silicon primary particles, for example, the silicon primary particles may be coated with amorphous carbon. The secondary particles may be dispersed in an amorphous carbon matrix.

The silicon-carbon composite may further include crystalline carbon. For example, the silicon-carbon composite may include a core including crystalline carbon and silicon particles, and an amorphous carbon coating layer on the surface of the core. The crystalline carbon may be or include artificial graphite, natural graphite, or a combination thereof. The amorphous carbon may include at least one of soft carbon, hard carbon, a mesophase pitch carbonized product, and calcined coke.

When the silicon-carbon composite includes silicon and amorphous carbon, a content of silicon may be in a range of about 10 wt% to about 50 wt% and a content of amorphous carbon may be in a range of about 50 wt% to about 90 wt% based on 100 wt% of the silicon-carbon composite. In addition, when the silicon-carbon composite includes silicon, amorphous carbon, and crystalline carbon, a content of silicon may be in a range of about 10 wt% to about 50 wt%, a content of crystalline carbon may be in a range of about 10 wt% to about 70 wt%, and a content of amorphous carbon may be in a range of about 20 wt% to about 40 wt% based on 100 wt% of the silicon-carbon composite.

Additionally, a thickness of the amorphous carbon coating layer may be in a range of about 5 nm to about 100 nm. An average particle diameter ($D_{50}$) of the silicon particles (primary particles) may be in a range of about 10 nm to about 1

$\mu$m, or about 10 nm to about 200 nm. The silicon particles may be present as silicon alone, in the form of a silicon alloy, or in an oxidized form. The oxidized form of silicon may be represented by $SiO_x$ (0<x<2). At this time, the atomic content ratio of Si:O, which indicates a degree of oxidation, may be in a range of about 99:1 to about 33:67. As included herein, when a definition is not otherwise provided, an average particle diameter ($D_{50}$) indicates a particle where an accumulated volume is about 50 volume% in a particle size distribution.

The Si-based negative electrode active material or Sn-based negative electrode active material may be mixed with the carbon-based negative electrode active material. When the Si-based negative electrode active material or Sn-based negative electrode active material are mixed with the carbon-based negative electrode active material included, the mixing ratio may be a weight ratio in a range of about 1:99 to about 90:10.

Binder

The binder is configured to adhere the negative electrode active material particles to each other, and to adhere the negative electrode active material to the current collector. The binder may be a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

When an aqueous binder is included as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and included. The alkali metal may be Na, K, or Li.

The dry binder may be a polymer material capable of becoming fiber, and may be, for example, polytetrafluoroethylene, polyvinylidene fluoride, a polyvinylidene fluoride-hexafluoropropylene copolymer, polyethylene oxide, or a combination thereof.

Conductive Material

The conductive material is included to provide electrode conductivity and any electrically conductive material may be included as a conductive material unless it causes a chemical change. Examples of the conductive material include a carbon-based material such as natural graphite, artificial graphite, carbon black, acetylene black, ketjen black, a carbon fiber, a carbon nanofiber, a carbon nanotube, and the like; a metal-based material of a metal powder or a metal fiber including copper, nickel, aluminum, silver, and the like; a conductive polymer such as a polyphenylene derivative; or a mixture thereof.

A content of the negative electrode active material may be about 95 wt% to about 99.5 wt% based on 100 wt% of the negative electrode active material layer, and a content of the binder may be about 0.5 wt% to about 5 wt% based on 100 wt% of the negative electrode active material layer. For example, the negative electrode active material layer may include about 90 wt% to about 99 wt% of the negative electrode active material, about 0.5 wt% to about 5 wt% of the binder, and about 0.5 wt% to about 5 wt% of the conductive material.

Current Collector

The negative electrode current collector may include, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof, and may be in the form of a foil, sheet, or foam. A thickness of the negative electrode current collector may be, for example, about 1 $\mu$m to about 20 $\mu$m, about 5 $\mu$m to about 15 $\mu$m, or about 7 $\mu$m to about 10 $\mu$m.

**Electrolyte**

For example, the electrolyte for a rechargeable lithium battery may be an electrolyte solution, which may include a non-aqueous organic solvent and a lithium salt.

The non-aqueous organic solvent is configured as a medium for transmitting ions taking part in the electrochemical reaction of a battery. The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like. The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include at least one of ethanol, isopropyl alcohol, and the like. The aprotic solvent may include at least one of nitriles such as R-CN (wherein R is a C2 to C20 linear, branched, or cyclic hydrocarbon group, a double bond, an aromatic ring, or an ether group, and the like); amides such as dimethylformamide; dioxolanes such as 1,3-dioxolane, 1,4-dioxolane, and the like; sulfolanes, and the like.

The non-aqueous organic solvent can be included alone or in a mixture of two or more types of solvents, and when two or more types are included in a mixture, a mixing ratio can be adjusted according to the desired battery performance, which may be known to those working in the field.

When using a carbonate-based solvent, a cyclic carbonate and a chain carbonate may be mixed and included, and the cyclic carbonate and the chain carbonate may be mixed in a volume ratio in a range of about 1:1 to about 1:9.

The non-aqueous organic solvent may further include an aromatic hydrocarbon-based organic solvent. For example, a carbonate-based solvent and an aromatic hydrocarbon-based organic solvent may be mixed and included in a volume ratio in a range of about 1:1 to about 30:1.

The electrolyte solution may further include at least one of vinylethyl carbonate, vinylene carbonate, or an ethylene carbonate-based compound to improve battery cycle-life.

Examples of the ethylene carbonate-based compound may include at least one of fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the organic solvent is configured to supply lithium ions in a battery, to enable a basic operation of a rechargeable lithium battery, and to improve transportation of the lithium ions between positive and negative electrodes. Examples of the lithium salt may include at least one of $LiPF_6$, $LiBF_4$, $LiSbF_6$, $LiAsF_6$, $LiClO_4$, $LiAlO_2$, $LiAlCl_4$, $LiPO_2F_2$, $LiCl$, $LiI$, $LiN(SO_3C_2F_5)_2$, $Li(FSO_2)_2N$ (lithium bis(fluorosulfonyl)imide; LiFSI), $LiC_4F_9SO_3$, $LiN(C_xF_{2x+1}SO_2)(C_yF_{2y+1}SO_2)$ (wherein x and y are integers in a range of 1 to 20), lithium trifluoromethane sulfonate, lithium tetrafluoroethanesulfonate, lithium difluorobis(oxalato)phosphate (LiDFBOP), and lithium bis(oxalato) borate (LiBOB).

A concentration of lithium salt may be within the range of about 0.1 M to about 2.0 M. When the concentration of lithium salt is within the above range, the electrolyte solution has a desired ionic conductivity and viscosity, and thus desired or improved performance can be achieved and lithium ions can move more effectively.

## Separator

Depending on the type of the rechargeable lithium battery, a separator may be present between the positive electrode and the negative electrode. The separator may include at least one of polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/-polyethylene/polypropylene three-layer separator, and the like.

The separator may include a porous substrate and a coating layer including an organic material, an inorganic material, or a combination thereof on one surface, or on both surfaces, of the porous substrate.

The porous substrate may be or include a polymer film formed of or including at least one of polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The porous substrate may have a thickness in a range of about 1 μm to about 40 μm, for example, about 1 μm to about 30 μm, about 1 μm to about 20 μm, about 5 μm to about 15 μm, or about 10 μm to about 15 μm.

The organic material may include a (meth)acrylic copolymer including a first structural unit derived from (meth)acrylamide, and a second structural unit including at least one of a structural unit derived from (meth)acrylic acid or (meth)acrylate, and a structural unit derived from (meth)acrylamidosulfonic acid or a salt thereof.

The inorganic material may include inorganic particles such as or including $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and a combination thereof, but is not limited thereto. An average particle diameter ($D_{50}$) of the inorganic particles may be in a range of about 1 nm to about 2000 nm, for example, about 100 nm to about 1000 nm, or about 100 nm to about 700 nm.

The organic material and the inorganic material may be mixed in one coating layer, or a coating layer including an organic material and a coating layer including an inorganic material may be stacked together.

The thickness of the coating layer may be in a range of about 0.5 $\mu$m to about 20 $\mu$m, for example, about 1 $\mu$m to about 10 $\mu$m, or about 1 $\mu$m to about 5 $\mu$m.

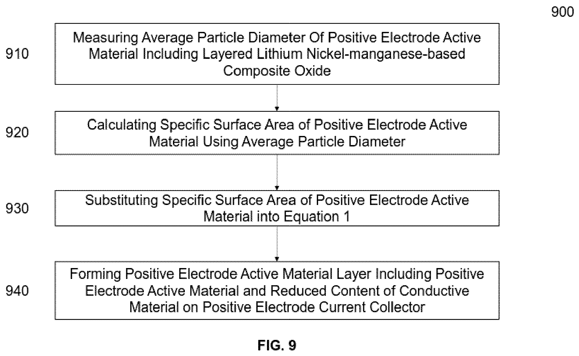

FIG. 9 is a flow chart illustrating a method of manufacturing a positive electrode, according to example embodiments. In FIG. 9, the method 900 includes operation 910, which includes measuring an average particle diameter ($D_{50}$) of a positive electrode active material including a layered lithium nickel-manganese-based composite oxide using a particle size analyzer. Operation 920 includes calculating a specific surface area of the positive electrode active material using an average particle diameter ($D_{50}$) assuming that the positive electrode active material is spherical. Operation 930 includes substituting the specific surface area of the positive electrode active material into Equation 1 to obtain a reduced or minimum content of the conductive material. In Equation 1, $y = 1.0923x^2 + 0.102x + 0.7471$, wherein x is a specific surface area of the positive electrode active material ($m^2$/g), $0.13 \le x \le 0.63$, and y is a content of the conductive material based on 100 wt% of the positive electrode active material layer. Operation 940 includes forming a positive electrode active material layer including the positive electrode active material and the reduced content of a conductive material on a positive electrode current collector.

Examples and comparative examples of the present disclosure are described below. However, the following examples are only examples of the present disclosure, and the present disclosure is not limited to the following examples.

## Example 1

### (1) Manufacturing of Positive Electrode

A positive electrode active material was prepared by mixing a first positive electrode active material having a secondary particle form, a particle diameter of about 13.6 $\mu$m, and a composition of $Li_{1.05}Ni_{0.75}Mn_{0.23}Al_{0.02}O_2$ and a second positive electrode active material having a secondary particle form, a particle diameter of about 3.12 $\mu$m, and a composition of $Li_{1.05}Ni_{0.75}Mn_{0.25}O_2$ in a weight ratio of 80:20. Herein, when measured by using a particle size analyzer (MT 3000, Microtrac Inc.), the positive electrode active material had an average particle diameter ($D_{50}$) of 12.3 $\mu$m and a specific surface area of 0.243 $m^2$/g, wherein the specific surface area was derived by assuming that the positive electrode active material had a spherical shape to calculate a surface area of the sphere, multiplying the surface area by the number of the positive electrode active material, and dividing a product therefrom by a weight of the positive electrode active material. A conductive material content of the parameter "y" was calculated as 0.8 by substituting the parameter "x" of Equation 1 discussed above with 0.243.

97.7 wt% of the prepared positive electrode active material, 1.5 wt% of a binder PVDF, and 0.8 wt% of the conductive material CNT were mixed in an NMP solvent to prepare a positive electrode composition. The prepared positive electrode composition was coated on an aluminum current collector. The coated aluminum current collector was dried and pressed to manufacture a positive electrode in which the current collector and the positive electrode active material layer were sequentially laminated.

### (2) Manufacturing of Negative Electrode

97.3 wt% of graphite as a negative electrode active material, 0.5 wt% of denka black, 0.9 wt% of carboxylmethyl cellulose, and 1.3 wt% of a styrene-butadiene rubber were mixed in an aqueous solvent to prepare a negative electrode active material slurry. The prepared negative electrode active material slurry was coated on a copper foil, and then dried and pressed to manufacture a negative electrode.

### (3) Manufacturing of Battery Cell

The positive electrode, a separator with a multi-layer structure of polyethylene/polypropylene, and the negative electrode were sequentially stacked to manufacture a pouch-type cell, and then an electrolyte solution prepared by adding 1.0 M of $LiPF_6$ lithium salt in a solvent of ethylene carbonate and diethyl carbonate mixed in a volume ratio of 50:50 was injected thereinto to manufacture a rechargeable lithium battery cell.

## Example 2

A rechargeable lithium battery cell was manufactured substantially in the same manner as in Example 1 with a difference that the positive electrode active material was prepared by changing the weight ratio of the first positive electrode active material to the second positive electrode active material to 70:30 from 80:20, and 97.7 wt% of the positive electrode active material was used with 1.4 wt% of the PVDF binder and 0.9 wt% of the conductive material CNT. Herein, when measured in the same manner as in Example 1, the positive electrode active material had an average particle diameter ($D_{50}$) of 11.0 $\mu$m and a specific surface area of 0.298 m$^2$/g.

### Example 3

A rechargeable lithium battery cell was manufactured substantially in the same manner as in Example 1 with a difference that the positive electrode active material was prepared by changing the weight ratio of the first positive electrode active material to the second positive electrode active material to 50:50 from 80:20, and 97.7 wt% of the positive electrode active material was used with 1.4 wt% of the PVDF binder and 0.9 wt% of the conductive material CNT. Herein, when measured in the same manner as in Example 1, the positive electrode active material had an average particle diameter ($D_{50}$) of 6.13 $\mu$m and a specific surface area of 0.409 m$^2$/g.

### Example 4

A rechargeable lithium battery cell was manufactured substantially in the same manner as in Example 1 with a difference that the positive electrode active material was prepared by changing the weight ratio of the first positive electrode active material to the second positive electrode active material to 30:70 from 80:20, and 97.7 wt% of the positive electrode active material was used with 1.1 wt% of the PVDF binder and 1.2 wt% of the conductive material CNT. Herein, when measured in the same manner as in Example 1, the positive electrode active material had an average particle diameter ($D_{50}$) of 3.41 $\mu$m and a specific surface area of 0.519 m$^2$/g.

### Example 5

A rechargeable lithium battery cell was manufactured substantially in the same manner as in Example 1 with a difference that the positive electrode active material was prepared by changing the weight ratio of the first positive electrode active material to the second positive electrode active material to 10:90 from 80:20, and 97.7 wt% of the positive electrode active material was used with 1.1 wt% of the PVDF binder and 1.2 wt% of the conductive material CNT. Herein, when measured in the same manner as in Example 1, the positive electrode active material had an average particle diameter ($D_{50}$) of 3.14 $\mu$m and a specific surface area of 0.629 m$^2$/g.

### Example 6

A rechargeable lithium battery cell was manufactured substantially in the same manner as in Example 1 with a difference that the first positive electrode active material alone without the second positive electrode active material was used as the positive electrode active material instead of the positive electrode active material prepared by mixing the first and second positive electrode active materials in the weight ratio of 80:20. Herein, when measured in the same manner as in Example 1, the positive electrode active material had an average particle diameter ($D_{50}$) of 13.6 $\mu$m and a specific surface area of 0.133 m$^2$/g.

### Comparative Example 1

A rechargeable lithium battery cell was manufactured substantially in the same manner as in Example 2 with a difference that 97.7 wt% of the positive electrode active material, 1.8 wt% of the binder PVDF, and 0.5 wt% of the conductive material CNT were used.

### Comparative Example 2

A rechargeable lithium battery cell was manufactured substantially in the same manner as in Example 4 with a difference that 97.7 wt% of the positive electrode active material, 1.8 wt% of the binder PVDF, and 0.5 wt% of the conductive material CNT were used.

### Comparative Example 3

A rechargeable lithium battery cell was manufactured substantially in the same manner as in Example 1 with a difference that Li$_1$Ni$_{0.91}$Co$_{0.07}$Al$_{0.01}$Mn$_{0.01}$O$_2$ was used as the positive electrode active material. Herein, when measured in the same manner as in Example 1, the positive electrode active material had an average particle diameter ($D_{50}$) of 2.35 $\mu$m and a specific surface area of 3.5 m$^2$/g.

**Evaluation Example** 1: **Calculating Minimum Amount of Required Conductive Material**

The positive electrode active materials included in the rechargeable lithium battery cells according to Examples 1 to 6 were measured with respect to $D_{50}$ by using PSA equipment, and the results are shown in Table 1 below. Subsequently, $D_{50}$ of the positive electrode active materials, which was measured by assuming that the positive electrode active materials were spherical, was used to calculate a surface area and a specific surface area of the positive electrode active materials, and the results are shown in Table 1 below.

Subsequently, after variously changing a conductive material content of the rechargeable lithium battery cells of Examples 1 to 6 to prepare positive electrode active material slurries, the positive electrode active material slurries were measured with respect to PSA particle size distributions to specify a minimum content of the conductive material by obtaining a conductive material content where a peak started to appear within a range of 0.01 $\mu$m to 0.1 $\mu$m, and then the minimum conductive material content was used with a specific surface area of the positive electrode active materials to derive an equation.

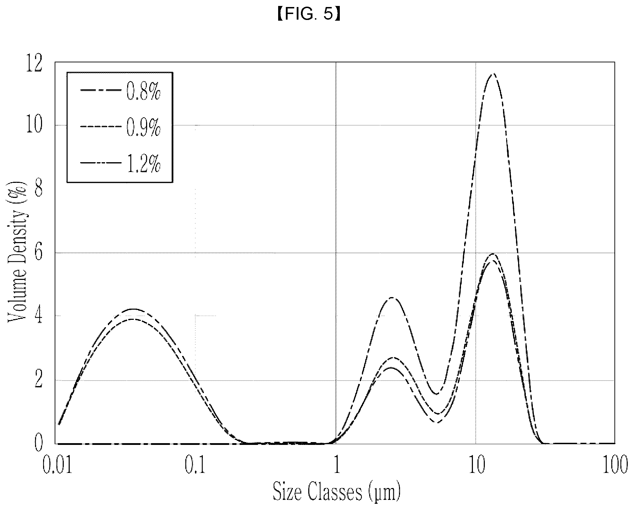

Referring to FIG. 5, in the positive electrode active material of Example 2, when the conductive material content was 0.8 wt% or less, no peak appeared within a range of 0.01 $\mu$m to 0.1 $\mu$m in the PSA particle size distribution, which confirmed that the conductive material existed to an extent of being absorbed on the surface of the positive electrode active material. On the contrary, when the conductive material content was 0.9 wt% or more, a peak appeared within the range of 0.01 $\mu$m to 0.1 $\mu$m in the PSA particle size distribution, which means that from this point, an excess of the conductive material was detected and that a conductive path between the active materials was understood to be successfully formed, and in fact, from this point, resistance of the electrode plate began to decrease, this conductive material content where the corresponding peak started to appear was defined as a required minimum content of conductive material.

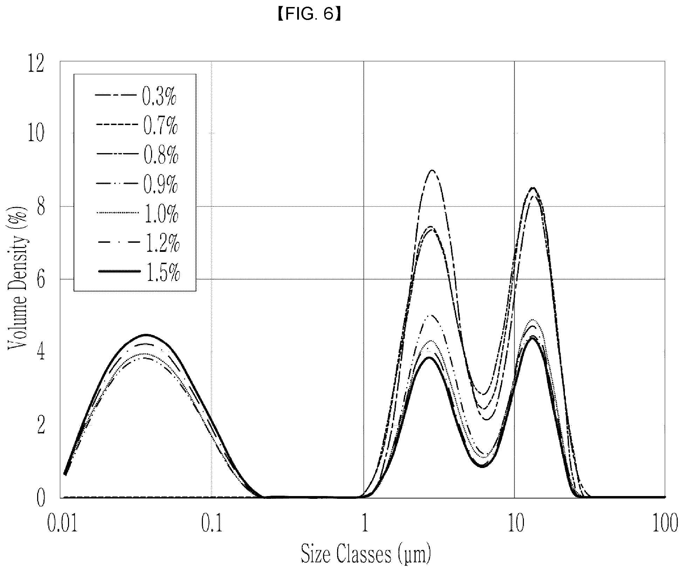

Referring to FIG. 6, the positive electrode active material of Example 3, when the conductive material content was 0.8 wt% or less, exhibited no peak within the range of 0.01 $\mu$m to 0.1 $\mu$m in the PSA particle size distribution. On the contrary, when the conductive material content was 0.9 wt% or more, a peak appeared within the range of 0.01 $\mu$m to 0.1 $\mu$m in the PSA particle distribution, and accordingly, 0.9 wt% was defined as a required minimum content of conductive material.

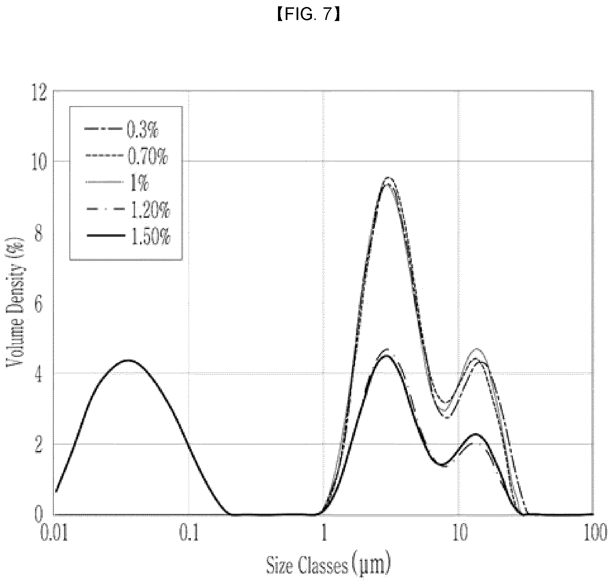

Referring to FIG. 7, the positive electrode active material of Example 4, when the conductive material content was 1.2 wt% or more, exhibited a peak within the range of 0.01 $\mu$m to 0.1 $\mu$m in the PSA particle size distribution, and accordingly, 1.2 wt% was defined as a required minimum content of conductive material.

Each minimum content of conductive material required for the rechargeable lithium battery cells of Examples 1 to 6 is shown in Table 1 below.

Table 1:

|  | $D_{50}$ ($\mu$m) | Total surface area ($m^2$) | Specific surface area ($m^2$/g) | Approximate value of required amount of conductive material (wt%) |
|---|---|---|---|---|
| Example 6 | 13.6 | 1.33 | 0.133 | 0.8 |
| Example 1 | 12.3 | 2.43 | 0.243 | 0.8 |
| Example 2 | 11.0 | 2.98 | 0.298 | 0.9 |
| Example 3 | 6.13 | 4.09 | 0.409 | 0.9 |
| Example 4 | 3.41 | 5.19 | 0.519 | 1.2 |
| Example 5 | 3.14 | 6.29 | 0.629 | 1.2 |

In Table 1, "total surface area" represents the total surface area obtained by multiplying the surface area of a single positive electrode active material particle by the number of positive electrode active material particles. Approximate values of the required amount of conductive material of Example 2 to 4 are approximate values that can be found through Figures 5 to 7.

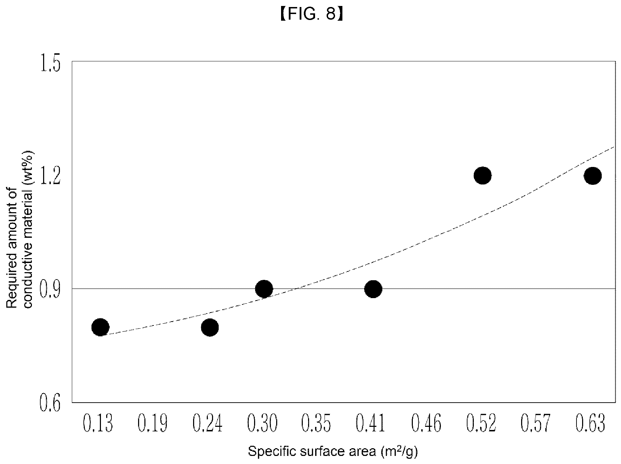

In a graph of FIG. 8, the relationship between each specific surface area of the positive electrode active materials of Examples 1 to 6 and each required minimum content of the conductive material is plotted. If we derive an approximation function using the specific surface area and the required content of conductive material, we can confirm that the relationship in the Equation 1 is obtained.

Referring to FIG. 8, as the specific surface area increased, the required minimum content of the conductive material increased, which confirmed Equation 1 describing the relationship between the specific surface area and the required minimum content of the conductive material.

## Evaluation Example 2: Evaluation of Electrode Plate Mixture Resistance

The rechargeable lithium battery cells according to Examples 1 to 6 were measured with respect to mixture resistance rate of the positive electrodes included therein, and the results are shown in Table 2.

Table 2:

|  | Electrode plate mixture resistance rate ($\Omega \cdot cm$) |
|---|---|
| Example 1 | 8.94 |
| Example 2 | 8.86 |
| Example 3 | 9.48 |
| Example 4 | 8.18 |
| Example 5 | 9.34 |
| Comparative Example 1 | 22.23 |
| Comparative Example 2 | 42.09 |
| Comparative Example 3 | 13.09 |

Referring to Table 2, Examples 1 to 5, in which the relationship between each specific surface area of the positive electrode active materials and each required minimum content of the conductive material satisfied Equation 1, compared with the comparative examples, were confirmed to exhibit reduced mixture resistance rate.

On the contrary, Comparative Examples 1 and 2, in which the relationship between each specific surface area of the positive electrode active materials and each required minimum content of the conductive material did not satisfy Equation 1, or Comparative Example 3, which used no cobalt-free positive electrode active material as the positive electrode active material, compared with the examples, all exhibited an increased mixture resistance rate. The increased mixture resistance rate may be explained by the fact that a desired content of the conductive material was not included therein.

While this disclosure has been described in connection with what is presently considered to be practical example embodiments, it is to be understood that the disclosure is not limited to the disclosed example embodiments. On the contrary, the disclosure is intended to cover various modifications and equivalent arrangements included within the scope of the appended claims.

**Description of Symbols:**

| | | | |
|---|---|---|---|
| 100: | rechargeable lithium battery | 10: | positive electrode |
| 11: | positive electrode lead tab | 12: | positive terminal |
| 20: | negative electrode | 21: | negative electrode lead tab |
| 22: | negative terminal | 30: | separator |
| 40: | electrode assembly | 50: | case |
| 60: | sealing member | 70: | electrode tab |
| 71: | positive electrode tab | 72: | negative electrode tab |

## Claims

1. A positive electrode, comprising:

   a positive electrode current collector; and
   a positive electrode active material layer located on the positive electrode current collector and including a positive electrode active material and a conductive material;
   wherein the positive electrode active material comprises a layered lithium nickel-manganese-based composite oxide, and
   in the positive electrode active material layer, the positive electrode active material and the conductive material satisfy Equation 1:

## Equation 1:

$$y = 1.0923x^2 + 0.102x + 0.7471$$

wherein, in Equation 1, x is a specific surface area ($m^2/g$) of the positive electrode active material, $0.13 \leq x \leq 0.63$, and

y is a content of the conductive material based on 100 wt% of the positive electrode active material layer.

2.  The positive electrode as claimed in claim 1, wherein y is in a range of about 0.8 wt% to about 1.2 wt% based on 100 wt% of the positive electrode active material layer.

3.  The positive electrode as claimed in claim 1 or 2, wherein the layered lithium nickel-manganese-based composite oxide has a nickel content in a range of about 60 mol% to about 80 mol%, and a manganese content that is equal to or greater than about 15 mol% based on 100 mol% of a total metal excluding lithium nickel.

4.  The positive electrode as claimed in any one of claims 1 to 3, wherein in the layered lithium nickel-manganese-based composite oxide, a cobalt content is in a range of about 0 mol% to about 0.01 mol% based on 100 mol% of a total metal excluding lithium.

5.  The positive electrode as claimed in any one of claims 1 to 4, wherein the layered lithium nickel-manganese-based composite oxide is represented by Chemical Formula 1:

    Chemical Formula 1:    $Li_{a1}Ni_{x1}Mn_{y1}Al_{z1}M^1_{w1}O_{2-b1}X_{b1}$

    wherein, in Chemical Formula 1, $0.9 \leq a1 \leq 1.8$, $0.6 < x1 \leq 0.8$, $0.1 \leq y1 \leq 0.4$, $0 \leq z1 \leq 0.03$, $0 \leq w1 \leq 0.3$, $0.9 \leq x1+y1+z1+w1 \leq 1.1$, and $0 \leq b1 \leq 0.1$, $M^1$ comprises one or more of B, Ba, Ca, Ce, Cr, Fe, Mg, Mo, Nb, Si, Sn, Sr, Ti, V, W, Y, Zr, and Zn, and X comprises one or more of F, P, and S.

6.  The positive electrode active material as claimed in any one of claims 1 to 5, wherein the positive electrode active material comprises secondary particles in which a plurality of primary particles are aggregated.

7.  The positive electrode active material as claimed in any one of claims 1 to 6, comprising:

    a first positive electrode active material having an average particle diameter ($D_{50}$) in a range of about 10 μm to 25 μm; and
    a second positive electrode active material having an average particle diameter ($D_{50}$) in a range of about 0.1 μm to about 5 μm.

8.  The positive electrode active material as claimed in claim 7, wherein a weight ratio of the first positive electrode active material to the second positive electrode active material is in a range about 80:20 to about 30:70.

9.  The positive electrode active material as claimed in any one of claims 1 to 8, wherein the positive electrode active material has an average particle diameter ($D_{50}$) in a range of about 3 μm to about 15 μm.

10. The positive electrode active material as claimed in any one of claims 1 to 9, wherein the conductive material comprises a linear conductive material and a spherical shape conductive material.

11. The positive electrode active material as claimed in claim 10, wherein a weight ratio of the linear conductive material to the spherical shape conductive material is in a range of about 10:90 to about 90:10.

12. A method for manufacturing a positive electrode, the method comprising:

    measuring an average particle diameter ($D_{50}$) of a positive electrode active material including a layered lithium nickel-manganese-based composite oxide using a particle size analyzer;
    calculating a specific surface area of the positive electrode active material using an average particle diameter ($D_{50}$) assuming that the positive electrode active material is spherical;
    substituting the specific surface area of the positive electrode active material into Equation 1 to obtain a reduced content of the conductive material; and
forming a positive electrode active material layer including the positive electrode active material and the reduced content of a conductive material on a positive electrode current collector;

Equation 1:

$$y = 1.0923x^2 + 0.102x + 0.7471$$

wherein, in Equation 1, x is a specific surface area ($m^2$/g) of the positive electrode active material, $0.13 \leq x \leq 0.63$, and
y is a content of the conductive material based on 100 wt% of the positive electrode active material layer.

13. A rechargeable lithium battery, comprising

the positive electrode as claimed in any one of claims 1 to 11;
a negative electrode; and
an electrolyte solution.

# FIG. 1

【FIG. 2】

【FIG. 3】

【FIG. 4】

【FIG. 5】

【FIG. 6】

【FIG. 7】

【FIG. 8】

900

910 — Measuring Average Particle Diameter Of Positive Electrode Active Material Including Layered Lithium Nickel-manganese-based Composite Oxide

920 — Calculating Specific Surface Area of Positive Electrode Active Material Using Average Particle Diameter

930 — Substituting Specific Surface Area of Positive Electrode Active Material into Equation 1

940 — Forming Positive Electrode Active Material Layer Including Positive Electrode Active Material and Reduced Content of Conductive Material on Positive Electrode Current Collector

**FIG. 9**

## EUROPEAN SEARCH REPORT

**Application Number**

EP 25 18 7304

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/313563 A1 (GUO FEILONG [CN] ET AL) 7 October 2021 (2021-10-07) * paragraphs [0074] - [0079] * * paragraph [0088] * * paragraph [0128] * * claims 1,10 * ----- | 1-9,13 | INV. H01M4/04 H01M4/131 H01M4/1391 H01M4/36 H01M4/505 H01M4/525 H01M4/62 |
| X | US 2020/313159 A1 (OSUMI SHINICHIRO [JP] ET AL) 1 October 2020 (2020-10-01) * paragraph [0026] * * paragraph [0041] - paragraph [0042] * * paragraph [0051] * ----- | 1-5,7,8, 10,11,13 | |
| X | US 2020/411842 A1 (MATSUOKA RIE [JP] ET AL) 31 December 2020 (2020-12-31) * paragraph [0025] * * paragraph [0031] * * paragraphs [0056], [0057] * ----- | 1-9,13 | |
| A | US 2021/126242 A1 (DU RUI [CN] ET AL) 29 April 2021 (2021-04-29) * paragraph [0005] - paragraph [0009] * * paragraph [0032] - paragraph [0033] * * paragraph [0038] * * paragraph [0062] * * paragraph [0082] * * table 1 * ----- | 1-13 | **TECHNICAL FIELDS SEARCHED (IPC)** H01M |
| A | US 2020/014021 A1 (NIIDA YOSHIHIRO [JP]) 9 January 2020 (2020-01-09) * paragraph [0041] * * paragraph [0046] * * paragraph [0064] - paragraph [0065] * * claim 1 * ----- | 12 | |

The present search report has been drawn up for all claims

| Place of search | Date of completion of the search | Examiner |
|---|---|---|
| The Hague | 25 November 2025 | Järvi, Tommi |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P4C01)

## ANNEX TO THE EUROPEAN SEARCH REPORT
## ON EUROPEAN PATENT APPLICATION NO.

EP 25 18 7304

This annex lists the patent family members relating to the patent documents cited in the above-mentioned European search report.
The members are as contained in the European Patent Office EDP file on
The European Patent Office is in no way liable for these particulars which are merely given for the purpose of information.

25-11-2025

| Patent document cited in search report | Publication date | Patent family member(s) | Publication date |
|---|---|---|---|
| US 2021313563 A1 | 07-10-2021 | CN 110429252 A | 08-11-2019 |
| | | DK 3844830 T3 | 18-11-2024 |
| | | EP 3844830 A1 | 07-07-2021 |
| | | ES 3004581 T3 | 12-03-2025 |
| | | FI 3844830 T3 | 28-11-2024 |
| | | HU E070067 T2 | 28-05-2025 |
| | | JP 7261881 B2 | 20-04-2023 |
| | | JP 2022515014 A | 17-02-2022 |
| | | PL 3844830 T3 | 10-02-2025 |
| | | US 2021313563 A1 | 07-10-2021 |
| | | WO 2021012768 A1 | 28-01-2021 |
| US 2020313159 A1 | 01-10-2020 | CN 111316476 A | 19-06-2020 |
| | | EP 3686965 A1 | 29-07-2020 |
| | | JP 7223999 B2 | 17-02-2023 |
| | | JP WO2019073830 A1 | 22-10-2020 |
| | | KR 20200073241 A | 23-06-2020 |
| | | US 2020313159 A1 | 01-10-2020 |
| | | WO 2019073830 A1 | 18-04-2019 |
| US 2020411842 A1 | 31-12-2020 | CN 111656578 A | 11-09-2020 |
| | | EP 3761406 A1 | 06-01-2021 |
| | | JP 7203328 B2 | 13-01-2023 |
| | | JP WO2019167558 A1 | 04-02-2021 |
| | | US 2020411842 A1 | 31-12-2020 |
| | | WO 2019167558 A1 | 06-09-2019 |
| US 2021126242 A1 | 29-04-2021 | CN 111384372 A | 07-07-2020 |
| | | EP 3800710 A1 | 07-04-2021 |
| | | US 2021126242 A1 | 29-04-2021 |
| | | WO 2020134781 A1 | 02-07-2020 |
| US 2020014021 A1 | 09-01-2020 | CN 110291664 A | 27-09-2019 |
| | | JP 6850975 B2 | 31-03-2021 |
| | | JP WO2018155240 A1 | 19-12-2019 |
| | | US 2020014021 A1 | 09-01-2020 |
| | | WO 2018155240 A1 | 30-08-2018 |

For more details about this annex : see Official Journal of the European Patent Office, No. 12/82